# EUROPEAN PATENT SPECIFICATION

(11) **EP 4 425 329 B1**
(45) Date of publication and mention of the grant of the patent: **15.07.2026**
(21) Application number: 23275038.0
(22) Date of filing: 03.03.2023
(51) Int. Cl.: G06F 9/445, G06F 21/12, G06F 21/44, G06F 21/57, G06F 21/53, G06F 9/455

(54) **SECURE EXECUTION OF PROGRAMS**
SICHERE AUSFÜHRUNG VON PROGRAMMEN
EXÉCUTION SÉCURISÉE DE PROGRAMMES

(43) Date of publication of application: 04.09.2024
(73) Proprietor: ENTRUST SECURITY UK LIMITED, Cambridge CB1 2GA (GB)
(72) Inventor: BAQER, Khaled, Cambridge, CB1 2GA (GB)
(74) Representative: Marks & Clerk LLP

(56) References cited:
- EP-A1- 2 608 099
- WO-A1-2022/153055
- US-A1- 2018 314 846

## Description

### Field

The present invention relates to a method and device for secure execution of computer programs. The device may be a Hardware Security Module for example.

### Background

A Hardware Security Module (HSM) is a device that securely stores and manages cryptographic keys, and performs a set of cryptographic algorithms. In some applications, it can be desirable to allow a user of the HSM to perform user-defined algorithms. In this way, a user is able to run a custom program that uses their cryptographic keys on the HSM. However, enabling a user to run a custom program on the HSM could compromise the security or operation of the HSM, and the information stored on the HSM. There is a continuing need to improve the security of such devices.

US 2018/314846 A1 describes facilities to secure guest runtime environments.

WO 2022/153055 A1 describes a device comprising: an input, a memory, and a processor module, configured to: store information in the memory defining a first isolated environment associated with a first user; responsive to a request received through the input, run the first isolated environment; authenticate the first user in the first isolated environment and, if the first user is authenticated, establish a first secure connection with the first user in the first isolated environment; and responsive to a user command received over the first secure connection, execute, in the first isolated environment, a first operation corresponding to the user command.

EP 2608099 A1 describes a method and system for controlling system settings of a computing device.

### Brief Description of the Figures

Devices and methods in accordance with non-limiting embodiments will now be described with reference to the accompanying figures in which:
Fig. 1 shows a schematic illustration of a Hardware Security Module (HSM) device in accordance with an example;
Fig. 2A shows a schematic illustration of a HSM according to an example;
Fig. 2B shows a container-based virtualisation stack according to an example;
Fig. 3 shows a method performed by a system comprising a HSM according to an example;
Fig. 4A shows a method of obtaining information identifying a desired container configuration according to an example;
Fig. 4B shows a method of obtaining system calls using a first approach, according to an example;
Fig. 5 shows a method of initialising a container according to an example;
Fig. 6A illustrates a first example of restricting the system calls enabled by the container according to an example;
Fig. 6B illustrates a second example of restricting the system calls enabled by the container according to an example;
Fig. 6C shows a method of executing a user-defined program on a HSM according to an example;
Fig. 7A shows a first method of updating the whitelisted configuration settings according to an example;
Fig. 7B shows a method of dynamically updating a container configuration according to an example;
Fig. 8 shows an alternative method performed by a HSM according to an example;
Fig. 9 shows a virtual machine-based virtualisation stack according to an example.

### Detailed Description

According to a first aspect, there is provided a computer-implemented method comprising: obtaining configuration information for an isolated execution environment; obtaining a program; initialising an isolated execution environment based on the configuration information; and executing the program in the isolated execution environment.

In one example, the method further comprises determining whether the configuration information specifies a configuration at least as restrictive as an approved configuration of the isolated execution environment; and initialising the isolated execution environment in response to determining that the configuration is at least as restrictive as the approved configuration.

In one example, the configuration information specifies at least one of: a system call, a device, a system capability, and/or an indication of internet connectivity.

In one example, the configuration settings of the container are maintained whilst the container is running.

In one example, the isolated execution environment is a container or a virtual machine.

The method further comprises: receiving updated configuration information; determining whether the current configuration of the isolated execution environment is at least as restrictive as the updated configuration; and in response to determining that the current configuration is not as restrictive as the updated configuration, updating the configuration of the isolated execution environment.

In one example, updating the configuration of the isolated execution environment comprises stopping the isolated execution environment.

In one example, the configuration information comprises information specifying configuration items relevant to security. The configuration information is a security policy.

In one example, receiving updated configuration information comprises receiving an updated approved configuration.

In one example, determining whether the configuration information specifies a configuration at least as restrictive as an approved configuration comprises determining whether the configuration information specifies only configuration settings that are included in the approved configuration.

In one example, the configuration information specifies a first system call, the approved configuration comprises a plurality of allowed system calls and wherein determining whether the configuration information specifies only configuration settings that are included in the approved configuration comprises determining whether the plurality of allowed system calls comprises the first system call.

In one example the configuration information specifies at least one of: a system call, a device or a system capability used by the program during execution. In one example the configuration information specifies a system call, and wherein the configuration information is generated by: obtaining a compiled version of the program; and determining a system call that is made during execution of the compiled version of the program.

In one example, the compiled version of the program comprises a machine code representation of the program.

In one example, the configuration information specifies an indication of whether internet connectivity is required and wherein the configuration information is generated by: obtaining a compiled version of the program; determining a system call that is made during execution of the compiled version of the program; determining whether the system call is a network-related system call; and setting the indication that internet connectivity is required in response to determining that the system call is a network-related system call.

In one example, a network-related system call is a system call that has the capability to accesses an external network. In one example, an external network is a network comprising devices outside of the HSM.

In one example, obtaining configuration information for an isolated execution environment comprises receiving, from a user device, a request to initialise a container for execution of the program, the request comprising the configuration information.

According to another aspect, there is provided a carrier medium comprising computer readable code configured to cause a computer to perform any of the above methods.

According to another aspect, there is provided a non-transitory computer readable storage medium comprising program instructions stored thereon that are executable by a computer processor to perform any of the above described methods. The methods are computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium. According to a further aspect, there is provided a carrier medium comprising computer readable code configured to cause a computer to perform any of the above described methods.

According to another aspect, there is provided a device, comprising one or more processors configured to: obtain configuration information for an isolated execution environment; obtain a program; initialise an isolated execution environment based on the configuration information; and execute the program in the isolated execution environment; wherein the one or more processors are further configured to: receive updated configuration information; determine whether the current configuration of the isolated execution environment is at least as restrictive as the updated configuration; and in response to determining that the current configuration is not as restrictive as the updated configuration, update the configuration of the isolated execution environment.

In one example, the device is a hardware security module device.

A Hardware Security Module (HSM) is a device that securely stores and manages cryptographic keys, and performs a set of cryptographic algorithms. In some applications, it can be desired to allow a user of the HSM to perform user-defined algorithms. In this way, a user is able to run a custom program that uses their cryptographic keys on the HSM.

However, enabling a user to run a custom program on the HSM could compromise the security or operation of the HSM, and the information stored on the HSM. Mitigating against such security issues can be important in a multi-tenant environment for example, where the HSM stores the cryptographic keys for multiple different users, who may not necessarily consent to their keys being shared with the other users.

In order to mitigate against such security issues, the user-defined program is executed in an isolated environment. For example, a container is used to execute and isolate a user-defined program.

The containers may be initialised with a standard configuration setting. For example, the configuration settings may be based on a whitelist provided by a trusted party, for example the manufacturer of the HSM. The whitelist may specify one or more of: the system calls that are considered safe for use by a user, the available devices that are considered safe for use by a user, the operating system capabilities that are considered "safe", and whether the container is to have internet connectivity. However, using a standard whitelist of configuration settings can result in a user-defined program being executed in a container that allows more functionality than the program needs in order to run. This can compromise the security or operation of the HSM, and the information stored on the HSM.

In an example, the functionality provided by an isolated environment is configured to limit the attack surface, i.e. the opportunity for a malicious actor to exploit the HSM functionality. For example, the HSM is configured to launch a customised container that restricts the configuration of the container. This reduces the attack surface that a user's program is exposed to. The customised configuration information may comprise information that is determined based on the program to be executed by the container (e.g. the required system calls). The customised configuration information may further comprise information that is specified by the user. The customised configuration settings are only used if they are at least as restrictive as an approved set of configuration settings. The set of customised configuration settings comprises one or more configuration settings relevant to security. The configuration information therefore acts as a security policy.

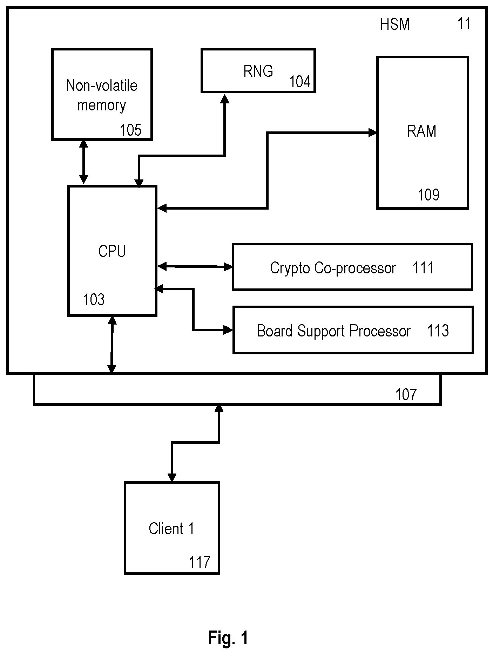

Fig. 1 shows a schematic illustration of a Hardware Security Module (HSM) device 11 in accordance with an example. The HSM 11 comprises a processing unit 103, a non-volatile memory 105 and working memory comprising Random Access Memory (RAM) 109.

In this example, the processing unit 103 is a Central Processing Unit (CPU) 103, however in other examples, the processing unit may comprise a field programmable gate array (FPGA) or an application specific integrated circuit (ASIC) for example, or a combination of multiple types of processing components.

The non-volatile memory 105 may include any form of non-volatile device memory such as flash, optical disks or magnetic hard drives for example. The non-volatile memory 105 may be physically secure and may be resistant to tamper by a third party, for example by the inclusion of physical security such as a membrane that covers the entire device, that cannot be removed without destroying the underlying physical hardware. The CPU 103 is in wired bi-directional communication with non-volatile memory 105 and the RAM 109.

Computer program code is stored in the non-volatile memory 105. When executed, a program is represented as a software product, or process, in the working memory. The processor 103 comprises logic circuitry that responds to and processes instructions in program code located in the working memory. The working memory comprises the RAM 109.

The below description refers to a "main application", which is a program comprising a set of computer instructions. The main application comprises machine code stored in the non-volatile memory 105 on the HSM 11. Also stored in the non-volatile memory 105 on the HSM 11 are any components necessary to execute the main application, including runtime system files. When executed, a copy of the main application machine code is loaded in the working memory. A "main application process" is the instance of the main application that is being executed, comprising the machine code in the working memory.

The main application comprises computer instructions embodying a set of one or more cryptographic algorithms. For example, the main application comprises computer instructions embodying one or more of the following cryptographic algorithms: cryptographic key generation; key derivation; encryption; decryption; and digital signature algorithms. The main application can be embedded in the non-volatile memory 105 of the Hardware Security Module 11 when the HSM 11 is manufactured by a trusted party, or can be provided by the trusted party as a whole or in part after manufacture. For instance, the main application can be introduced by the trusted party as a computer program product, which may be in the form of a download. Alternatively, modifications to existing main application can be made by the trusted party by an update or plug-in.

The HSM 11 runs an operating system, for example a Linux operating system. The operating system comprises system software that manages the hardware and software resources of the HSM 11, and acts as an intermediary between the main application and the HSM hardware.

In use, the HSM device 11 may be located within a larger system. In this case, the HSM 11 is communicatively coupled to a computer or a server device in the larger system (for example) through interface 107, which comprises a communication link to the computer or server device. For example, the HSM 11 can be implemented in the form of a PCI express card directly plugged into the computer or server device, or the HSM device 11 can be communicatively connected to the computer or server device by a USB connection. In use, the HSM device 11 receives user requests through interface 107.

In one example, the HSM 11 is located in a user system. In this case, the user system has a dedicated local HSM 11 device. The HSM 11 is directly coupled to a client (user) computing device 117 (controlled by the user) through interface 107, for example the HSM device 11 can be a PCI express card directly plugged into the computing device 117 or can be communicatively connected to the client computing device 117 by a USB connection. The client computing device 117 may be a server or an end-user computing device for example.

In a different example, the HSM 11 is located in a host system (not shown) which is separate to the client computing device 117. The host system may be a service provider system for example. In this case, the client computer 117 communicates with a computer or server device in the host system. The HSM device 11 is directly coupled to the computer or server device in the host system through interface 107. For example, the HSM device 11 can be a PCI express card directly plugged into the computer or server device in the host system, or the HSM device 11 can be communicatively connected to the computer or server device by a USB connection. The client computing device 117 is thus communicatively coupled to the HSM device 11 through a computer or server device present in the host system (which is not shown in Fig. 1). Communication between the user computing device 117 and the host computer or server device (not shown in Fig. 1) may be performed via an Internet connection for example.

The non-volatile memory 105 stores one or more cryptographic keys associated with a user. One or more cryptographic application keys are associated with the user for use with the cryptographic algorithms embodied in the main application. The application key(s) may be securely stored outside of the HSM device 11 using a master key. For example, the application key(s) may be encrypted using Advanced Encryption Standard (AES) encryption (for example) using the master key stored in the HSM device. The encrypted application key(s) can then be transmitted to a separate external device for storage. The master key however is stored on the HSM device 11.

The application keys associated with the user are used to perform one or more cryptographic algorithms embodied in the main application. When a user request to perform an algorithm is received at the HSM 11, the relevant application key or keys are retrieved by the HSM 11, decrypted using the master key, and loaded into the RAM 109 space of the main application process. They may then be used by the HSM 11 to perform one or more cryptographic algorithms, including performing various encryption and decryption algorithms, and performing digital signature algorithms.

The HSM device 11 further comprises a Board Support Processor 113. Board Support Processor 113 is configured to communicate with a plurality of on-board sensors, monitoring the operation of the main CPU and the other hardware components of the Hardware Security Module 11. The sensors may include, but are not limited to, CPU and/or board temperature sensors, voltage sensors and/or current sensors.

The HSM further comprises a random number generator component 104.

In some examples, the HSM device 11 may further comprise a crypto co-processor 111. The crypto-coprocessor 111 may perform various standard cryptographic functions in hardware, for example various encryption and decryption algorithms, and digital signature algorithms. In other examples, this functionality is integrated in the main processing unit 103. For example, the main processing unit 103 may comprise a system on a chip FPGA (SoC FPGA), where the various standard cryptographic functions are implemented in hardware in the programmable logic.

Various other components may be included which are not shown in Fig. 1.

Although a HSM device is described here, the invention is not limited to such, and the below described methods may be implemented on various devices used for performing cryptographic algorithms and/or storing cryptographic keys. For example, a software emulator running on a general purpose computing device or server may enable the computing device or server to behave like a HSM device. In this case, a computer program running in the computer device or server emulates a HSM device, and the below described methods are implemented on the computer device or server in this environment.

As discussed above, the HSM main application comprises computer instructions embodying a set of one or more cryptographic algorithms. However, a user may wish to perform an algorithm for which computer program code is not provided in the main application on the HSM device 11. In light of this, there is provided functionality to receive and execute a user-defined program at the HSM 11, as will be described in more detail below.

The user-defined program may be specified in a form that can be executed by the CPU 103 (e.g. in machine code). In other examples, the user-defined program is provided to the HSM 11 in an intermediate form, and is then converted by the HSM 11 into a form that can be executed by the CPU 103. Enabling user-defined code to be executed on the HSM provides flexibility, and allows a user to execute custom algorithms on the HSMs that make use of their cryptographic keys.

However, allowing a user to unconditionally execute arbitrary user-defined code on a Hardware Security Module (HSM) 11 may compromise the operation and security of the HSM 11. The user code is therefore executed in an isolated environment on the HSM device 11. For example, the HSM 11 uses containers to execute user code. A container is an example of an isolated environment. Using the container to execute the code isolates the user-defined code from the rest of the HSM runtime environment. A container is an executable unit of software in which application code is packed along with its libraries and dependencies. Containers take advantage of a form of Operating System (OS) virtualization in which features of the OS are leveraged to isolate processes. The containers may be referred to as OS-level containers because they are managed by the OS.

Isolating the user-defined program from the rest of the run-time environment creates a consistent environment for executing user-defined programs and limits exposure to rest of the HSM runtime environment. Executing the user-defined code in a container thus provides a sandbox in which the execution environment can be controlled and isolated from the main application. This mitigates against a user accidentally or deliberately introducing a security vulnerability to the HSM.

As discussed above, in an example the HSM 11 runs the Linux operating system. The Linux operating system may support the use of Linux containers (e.g. Linux LXC containers, and/or Linux LXD containers). Where Linux containers are used, Linux container technology provides the ability to control the operation of the container, e.g. by limiting the operations that can be performed by the container. The configuration of a container can be controlled to limit the operations that can be performed by code being executed in the container. The configuration associated with each Linux container is defined in a configuration file. For example, the container can be configured in such a way that it limits the system calls to the Operating System (OS) that can be made by the code executed in the container. Linux has over 300 system calls. Allowing a user defined program to access all 300 system calls could give rise to a security vulnerability. To this end, the system calls that can be made by programs executing in a container may be limited to a "whitelist" of system calls - this may be around 100 system calls for example. These are the system calls that are considered to be "safe" by a trusted party, for example a system administrator. Restricting the number of system calls reduces the attack surface, i.e. the potential ways in which the security of the HSM can be compromised. The available system calls can be limited using a seccomp profile, which specifies the allowed system calls. The seccomp profile is used to configure a seccomp filter when the container executing the user-defined program is initialised. The container can additionally or alternatively be configured in such a way that it limits the devices (e.g. storage devices) that can be accessed by the code executed in the container for example.

By controlling the configuration of the containers used to execute user code, even if the user-defined code contains malicious elements, the effect it could have on the security of the HSM (in particular the security of the information, such as cryptographic keys, stored on the HSM) is limited. For example, if the user-defined code has been compromised by a malicious third party, without knowledge of the user, the security issues caused by running the code on the HSM are limited by isolating the user code in the isolated environment (the container in this example).

This can be particularly important in a multi-tenant environment where the HSM 11 has access to (e.g. stores) cryptographic keys associated with other users. In this case, without sufficient controls in place, a user-defined program from a first user of the HSM 11 could be used to compromise the cryptographic keys of another user.

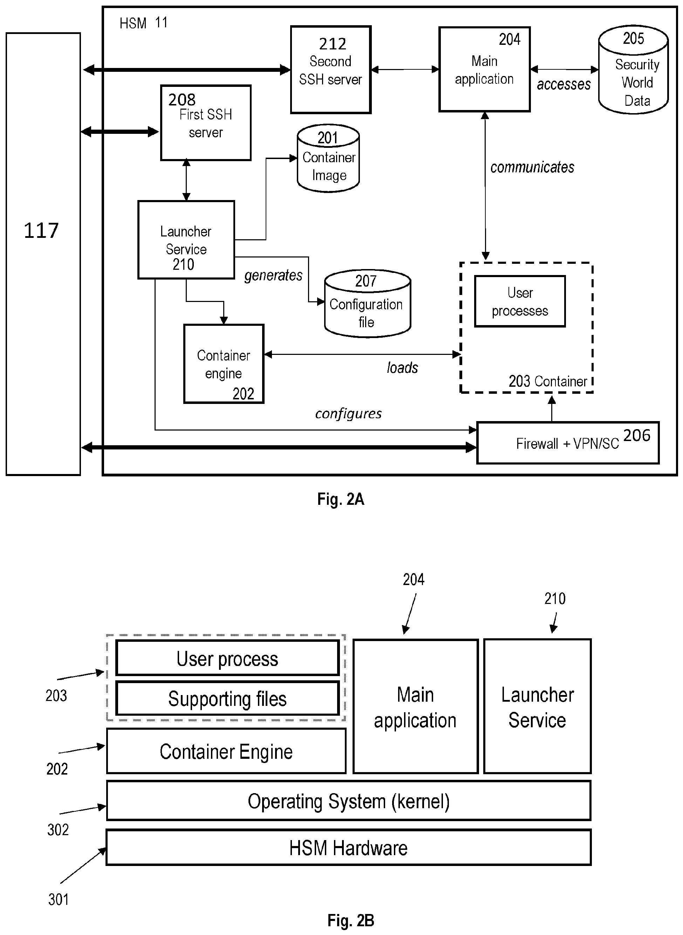

Fig. 2A shows a logical diagram of a Hardware Security Module 11 according to an example. In particular, Fig. 2A shows an illustration of various software processes being executed by the HSM 11. The HSM 11 may be a HSM 11 such as described in relation to Fig. 1 for example.

As discussed above, a container 203 is a virtual runtime environment that runs on top of an operating system (OS) kernel 302. The container 203 isolates one or more running processes running in the container 203 from the rest of the system. The container 203 is an example of an isolated environment.

In this example, a file 201 corresponding to the container 203 is provided by the user in a request transmitted to the HSM 11. This file may also be referred to as the container image 201 or the container repository. Once received, the container image 201 is stored in the working memory of the HSM 11. When run, the container image 201 becomes the container 203. The container image 201 comprises program code corresponding to the programs to be run in the container. In one example, once created, the container image 201 is immutable (i.e. such that it cannot be changed). The container image 201 further comprises all libraries, supporting files and programs, and any language interpreter required to run these programs on the HSM 11. This means that when the container 203 is running, the programs may run without requiring access to files outside the container 203.

The launcher service 210 comprises a set of program instructions that, when executed, store the received container image 201 in working memory in response to receiving a command to start the container 203, and initiate and run the container 203 by sending an instruction to the container engine 202 to initiate a container 203 according to the container image 201 and a configuration file 207.

The client device 117 communicates with the launcher service 210 through a first secure channel. In this example, the first secure channel is implemented using the secure shell (SSH) protocol. A first SSH server 208 runs on the HSM 11 corresponding to the first secure channel. This will be described in more detail below.

When a request comprising a container image 201 is received through the first secure channel, the launcher service 210 stores the received container image 201 in working memory, then transmits an instruction to a container engine 202 to initialize a container according to the container image 201 and a container configuration specified in a configuration file 207. In this example, the container image is provided by the user. However, in other examples, the launcher service 210 obtains the container image 201 by retrieving a default container image 201 stored in the non-volatile memory 105 of the HSM 11.

The configuration file 207 may be a default configuration file stored on the HSM 11 or may be generated by the launcher service 210 in response to the request in the manner described in more detail below. The launcher service 210 takes the configuration file 207 and a request to initiate a container from the user, and instructs the container engine 202 to start a container. The configuration file 207 and container image 201 are provided to the container engine 202 by the launcher service 210. A container for executing the user-defined program is thus initialised based on a container image 201 and a configuration file 207. The container configuration file 207 defines, amongst other things, the capabilities of the container, the devices that are accessible to the container, and a seccomp filter that controls the system calls that can be made by programs executing in the container.

The container engine 202 is configured to initiate the container 203 in response to a request from the launcher service 210. The container engine 202 processes the configuration settings provided in the configuration file 207 and sends this information to the OS kernel 302 to set up the container. The container engine 202 makes one or more API calls to the Operating System (OS) kernel 302. The OS kernel 302 implements the isolation of the container 203, and enforces the part of the non-volatile memory 105 and network connections available to the container 203. The OS kernel 302, together with the memory management unit within the CPU 103, allocates part of the RAM 109 to the container, and prevents writing to other parts of the RAM 109. In this way, the container isolation is implemented by the OS kernel 302, using hardware components such as the memory management unit. Consequently a container is an OS-level virtualisation tool. Once running, a container 203 is a set of one or more processes that are isolated from the rest of the system. Example implementations of the container engine 202 include Linux LXC and LXD.

The configuration settings specified in the configuration file 207 are implemented by and enforced by the OS kernel 302. The OS kernel 302 is configured to process requests from the container 203 (e.g. system calls) and action these requests depending on the configuration settings of the container (e.g. whether a specific system call is enabled for the container). The configuration settings of the container are maintained whilst the container is running, and can only be modified by an authorised user, as described below.

Once running, communication between the client device 117 and the container 203 may be performed via a firewall, and a virtual private network or third secure channel 206 configured by the launcher service 210. The third secure channel may be implemented by a third SSH server. The third secure channel may be configured by the user. The HSM 11 also executes a main application process 204. The main application has been described previously, and comprises computer program code for managing, generating and manipulating cryptographic keys. For example, the main application process includes one or more of: predefined algorithms for generating cryptographic keys, code for loading a cryptographic key onto the HSM 11, code for retrieving a cryptographic key stored on the HSM 11 etc. The main application process 204 is configured to access security world data 205 stored in the non-volatile memory 105 of the HSM 11. Security world data 205 includes cryptographic keys associated with a user. Communication between the client device 117 and the main application process 204 is performed via a second secure channel. In this example, the second secure channel is implemented using the secure shell (SSH) protocol. A second SSH server 212 runs on the HSM 11 corresponding to the second secure channel.

The main application 204 may communicate with the container 203, to provide data (e.g. security world data 205) for use by the user processes executed within the container 203. For example, the HSM main application 204 communicates with the container 203 via an internal network port of the container 203. In an example, the container 203 is used to perform a user-defined algorithm that uses a cryptographic key associated with the user.

The HSM main application code is provided by a trusted party. For example, the main application code can be embedded in the non-volatile memory when the HSM 11 is manufactured, or can be provided by the trusted party by an update or plug-in. However, a user may wish to perform a function that is not provided in the main application. In the example of Fig. 2A, the container 203 is provided for executing a user-defined program. This allows a user access to increased functionality, whilst limiting exposure of the HSM 11. In particular, since the user-defined program is executed in the container 203, the runtime environment of the user-defined program is isolated from the HSM main application 204 which has access to the security world data 205, thereby improving security.

Fig. 2B shows a container-based virtualisation stack according to an example. In particular, Fig. 2B shows an Operating System kernel 302 running on the HSM hardware 301. The OS kernel 302 runs the container engine 202, the launcher service 210, and the HSM main application 204 as separate processes. In the examples described below, the Operating System (OS) is a Linux Operating system.

The container engine 202 runs the container 203. The container 203 comprises the user process(es) and the supporting files for these processes. In the example of Fig. 2B, the runtime environment of the container 203 is isolated from the runtime environment of the HSM main application 204. Various known container engines may be used. Examples of container engines include Docker, Linux LXC and Linux LXD.

As has been described previously, each container 203 is associated with a configuration file 207, which is stored separately to the container image 201 in this example. The configuration file 207 defines one or more of: 1) how the network is virtualized in the container (e.g. which of the host's network interfaces are accessible to the runtime environment of the container); 2) a system call filter (e.g. which controls the system calls that can be made by a program executing in the container); 3) the Linux Capabilities available to the program executing in the container (e.g. controlling whether access is provided to specific kernel resources that were previously unavailable to unprivileged processes); and 4) the hardware devices mounted in the OS file system that can be accessed (e.g. for read or write) by the programs executing in the container 203.

One approach is to initialize all containers for running user-defined code according to a default whitelist of system calls, devices, and capabilities, which is the same for all initialised containers. The whitelist corresponds to a default configuration file stored on the HSM. For example, the whitelist contains the system calls, devices and capabilities that are deemed to be "safe" by a system administrator.

However, this whitelist may be too permissive for a user's specific use case. For example, although the number of system calls that can be made may be reduced to around 100 in the default whitelist, even this reduced set of 100 system calls may be too permissive for some use cases.

In the following description, there is provided a method for executing a user-defined program in the HSM 11 that specifically controls the configuration of the container, based on the functionality of the program being executed by the container. The configuration file 207 in this example is generated by the launcher service 210 based on configuration information provided by the user. The configuration file 207 is then provided to the container engine 202 and used to set up the container 203 in the same manner described previously. In this way, the potential for a malicious party to compromise the security of the HSM 11 is further reduced.

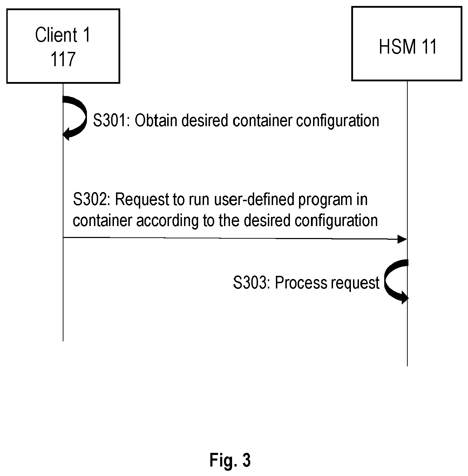

Fig. 3 shows a method performed by a system comprising a HSM 11 and a client device 117 according to an example. The client device 117 corresponds to a user of the HSM device 11. As has been described previously, the client device 11 may be a computing device such as a desktop or laptop computer, or mobile device for example. As described previously, the HSM 11 may be directly coupled to the client computing device 117. Alternatively, the HSM 11 is located in a host system which is separate to the client computing device 117 and communication performed through the host system. The HSM 11 may be a HSM as has been described in relation to Fig. 1 and Fig. 2 for example.

In step S301, the client 117 obtains information indicating a desired container configuration - also referred to as the container configuration information. The desired container configuration may also be referred to as a first container configuration. In an example the information indicating the desired container configuration comprises one or more of: 1) devices of the HSM 11 that are to be made accessible to the container, 2) capabilities of the container (e.g., an indication of the root privileges available to a process executing in the container), 3) an indication of the system calls that are to be supported by the container (e.g. the OS system calls that can be made by the process in the container and actioned by the kernel), and/or 4) whether the container is to have internet connectivity.

As will be discussed in more detail below, in some examples the information indicating the desired container configuration is generated based on the user-defined program that is to be executed within the container. After the client 117 has obtained the information identifying the desired container configuration, the method proceeds to step S302.

In step S302, the client 117 transmits a request to the HSM 11 to initialise a container that is configured according to desired container configuration (obtained in step S301). Step S302 comprises the client 117 transmitting a request to execute the user-defined program in the container with the desired container configuration to the HSM 11. In this example, step S302 comprises transmitting a request to run a container from a client 117 to a HSM 11, wherein the request comprises a container image and information specifying the container configuration (container configuration information). In an alternative example, the request comprises a reference (e.g. an address in memory or a file name) associated with a container image stored on the HSM 11. In this example, the container image comprises the user-defined program. The container image further comprises all libraries, supporting files and programs, and any language interpreter required to run these programs on the HSM 11. The user therefore provides a container image including the user's program, any required files, and any binaries that that user's program depends on. The container image comprising the user-defined program may be provided from the client device 117 to the HSM 11 using various mechanisms. For example, EP3952202 - A DEVICE AND A METHOD FOR PERFORMING A CRYPTOGRAPHIC ALGORITHM describes an example method of providing computer program code embodying a desired algorithm in an input data packet.

In this example, the request (which includes the container image comprising the user defined program and the container configuration information) is communicated between the client 117 and the HSM 11 over the first secure channel to mitigate against tampering (e.g. by encrypting the desired container configuration at the client 117 in a way that can be decrypted by the HSM 11). The first secure channel is a trusted channel between the client 117 and the launcher service 210 of the HSM 11. In an example, the first secure channel uses the SSH protocol. Establishing a secure channel is described in more detail below.

After receiving the request to initialise a container according to the desired container configuration, the method proceeds to step S303.

In step S303, the HSM 11 processes the request for the container. In particular, in step S303 the launcher service 210 processes the request for the container.

The steps involved in processing the request for the container will be discussed in more detail below. However, in an example step S303 comprises determining whether the desired configuration is allowable (e.g. whether the desired configuration requested by the user satisfies a minimum "safe" criteria for containers that are run on the HSM 11) and, in response to determining that the desired configuration is permitted, generating a container configuration file 207 and launching a container, where the configuration settings in the configuration file 207 are set according to the desired configuration. The configuration settings are checked to confirm that they are at least as restrictive as a default "safe" configuration.

As will be apparent from the description below, this approach may improve the security of the HSM 11 because the functionality available to the process being executing in the container is restricted to only the functionality specified in the desired container configuration. In the case where the desired configuration contains the system calls used by the user-defined program, the methods described herein improve the security of the HSM 11, by virtue of generating a container in which the allowed system calls correspond to the system calls that are used by a program. In this way, the attack surface (that could be exploited by a malicious party) between the container executing user-defined code and the HSM 11 environment outside the container is reduced. Reducing the attack surface in this way limits the ability of malicious code (executing within the container) to interact with the environment outside the container. In particular, the method described herein may limit the possible vectors of attack from the container to the HSM 11. This could arise, for example, if a malicious party was to modify a user-defined program before transmission without the user's knowledge.

As has been described previously, the container 203 is launched by the launcher service 210. When executed, the launcher service 210 is a computer-implemented process that is separate from the HSM main application 204. The launcher service 210 comprises a set of program instructions contained in the HSM memory. In an example the launcher service 210 provides a command to the container engine to start a container, comprising the container image and configuration file. The container engine makes one or more API calls to the Operating System (OS) kernel. The container image is loaded into a part of the RAM 309 corresponding to the container.

The individual steps of the method will now be discussed in greater detail.

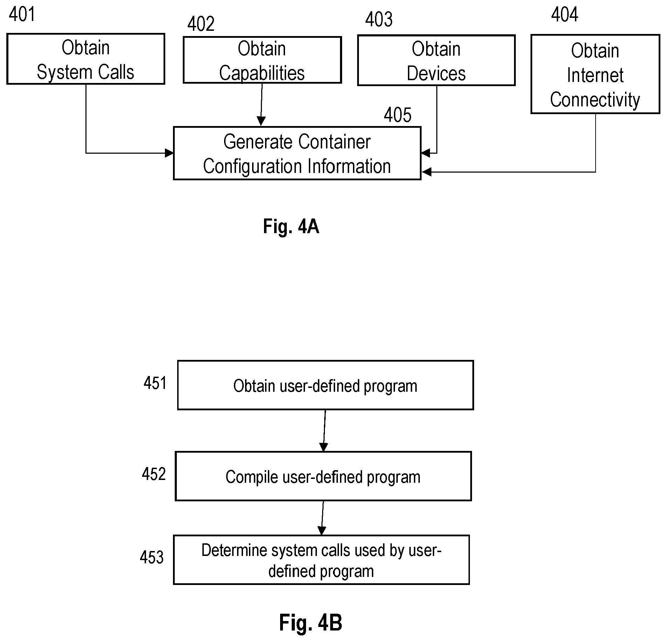

Fig. 4A shows a method of obtaining information identifying a desired container configuration and generating container configuration information according to an example. As discussed above, in an example the container configuration information comprises one or more of: 1) devices of the HSM that are to be accessible to the programs executing in the container; 2) the Linux capabilities that are accessible to programs executing in the container; 3) the system calls that can be made by programs executing in the container and/or 4) whether the programs executing in the container have internet access.

The method comprises performing one or more of: step 401, step 402, step 403, and/or step 404; and step 405. In this example, the method is performed on the client device 117. However, in other examples, the method may be performed on the HSM.

In step 401, the method comprises obtaining the system calls that are to be made available to the processes running in the container (e.g. the user-defined program). In this example, step 401 comprises determining the system calls that the user-defined program will need when executed. A system call is a programmatic way in which a computer program requests a service from the kernel of the operating system. All computer programs that use computer resources use system calls. System calls are used for process creation, process management, memory management, networking, device I/O handling etc. Linux system calls include: fork(), exit(), exec(), open(), read(), write(), close() etc.

In the below, a first approach and a second approach to obtaining the system calls is described. In step 401, one or both of the first approach and the second approach is performed.

In the first approach, the system calls are obtained by determining the system calls that are used by the user-defined program that is to be executed within the container. Fig. 4B shows a method of obtaining system calls using the first approach according to an example. The method of Fig. 4B is implemented by the client device 117 in this example. The method begins in step 451. In step 451 the method obtains the user-defined program. The method proceeds to step 452.

In step 452 the method compiles the user-defined program. This involves converting the user-defined program from a first representation (e.g. a high-level representation) into a form that can be executed by the hardware of the HSM 11 (e.g. a machine code representation). In an example the output of step 452 includes a binary file representing the user-defined program in a binary form that can be processed by the hardware of the HSM 11. After compiling the program in step 452 the method proceeds to step 453.

In step 453 the method determines the system calls that are made when executing the user-defined program. The system calls that are made when executing the user-defined program are determined based on the compiled user-defined program from step 452. In an example, the 'strace' utility is used to determine the system calls that are made when executing the compiled user-defined program. The list of system calls that are used when executing the program may be obtained by running strace (a Linux program) on the user-defined program binary. The 'strace' is a diagnostic utility for Linux that intercepts and records the system calls that are made by a given process. Each line in the output trace comprises the system call name, followed by its arguments in parentheses and its return value.

In an example the system calls made by a user-defined program are obtained by executing the following command in a Linux terminal:
strace ./program
where 'program' is the user-defined program to be executed in the container. The output of the 'strace' utility comprises system calls made by the program to the Linux kernel, followed by the arguments used in the system call and the return value. An example output of the 'strace' utility, for illustration purposes only, includes:

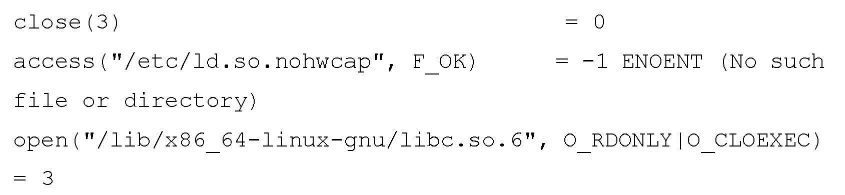

After obtaining the output of the 'strace' program a post-processing step is performed to obtain the system calls used by the user-defined program. The output of the 'strace' utility is parsed to determine the systems calls from the output text, which comprises: the system calls, the arguments and the return values. In the illustrative example above, the system calls used by the user-defined program include the 'close', 'access', and 'open' system calls. This step comprises parsing the system calls used by the program.

In the above example, the user-defined program is written in a compiled language, such as C. In other examples, the user-defined program is written in an interpreted language, such as Python. In this case, the method comprises interpreting and executing the program to determine the system calls (rather than compiling the program). A tool such a "strace" or another debugging tool is used as described previously. In the first approach to obtaining system calls, a list of system calls is obtained that depends on the user-defined program being executed in the container. As will be apparent from the description below, in the first approach to obtaining system calls, there is a direct link between the functionality of the program being executed in the container and the configuration of the container in which the program is being executed.

In a second approach to obtaining the system calls, the available system calls are user-specified. For example, the system calls that are to be permitted by the container are obtained from a list of system calls that are specified by a specific regulator and/or cryptographic standard. For example, the user can manually type the desired capabilities into a file containing the container configuration information.

Returning to Fig. 4A. In step 402, the method comprises obtaining the capabilities of the container. In an example, the capabilities of the container are user-specified and are provided to the client device 117 by a user (e.g. by user input to the client device 117). For example, the user can manually type the desired capabilities into a file containing the container configuration information.

In another example the capabilities of the container are determined based on the user-defined program being executed in a container. In a particular example the capabilities of the container are determined based on an output of a utility program that is configured to determine the capabilities required to execute the user-defined program. For example, a tool configured to enable capabilities debugging may be used.

In a further example the capabilities of the container are determined based on the system calls that are used by the user-defined program. For example, the system calls made by the user-defined program are determined by inspecting the output of the 'strace' program (as discussed in relation to step 401 and 451 - 453). The capabilities required by the user-defined program are then determined from the system calls used by the user-defined program. For example, in the case where the system calls comprise network related system calls, it is determined that network related capabilities are required.

In step 403, the method comprises obtaining the devices of the HSM that are to be accessible to the container. In an example, the devices are user-specified and are provided to the client device 117 by a user (e.g. by user input to the client device 117). For example, the user can manually type the desired devices into a file containing the container configuration information.

In another example the devices are determined based on the user-defined program being executed in the container. In a particular example the devices are determined based on an output of a utility program that is configured to determine the devices required to execute the user-defined program. For example, a tool configured to enable devices debugging may be used.

In a further example, in step 403 the user-defined program is dynamically run (e.g. by a utility such as 'strace'). The output of the utility is subsequently analyzed to determine the devices that are accessed when the user-defined program is run. These devices are subsequently set as the devices that are to be accessible to the container.

In step 404, the method comprises obtaining the internet connectivity status that is required by the container. In an example the internet connectivity status comprises an indication of whether or not internet connection is required (e.g. Internet connection = yes/no). In this example, the user has a binary option "internet connectivity: on/off", where a user may specify that their program is run "offline" - in this case no network connectivity features are available.

In a first approach to determining the internet connectivity status, the internet connectivity required by the container is specified by a user (e.g. by a user providing an indication whether the container requires internet connectivity). For example, the user can manually type whether or not internet connection is required into a file containing the container configuration information.

In a second approach to determining the internet connectivity status, the desired internet connectivity of the container is determined based on the functionality of the user-defined program being executed in the HSM 11. For example, the internet connectivity is determined by using a utility to dynamically run the user-defined program and extract this information. For example, the system calls made by the user-defined program are determined by inspecting the output of the 'strace' program (as discussed in relation to step 401 and 451 - 453). After obtaining the system calls used by the user-defined program, it is determined whether internet connectivity is required based on the system calls used by the user-defined program. This may comprise determining whether any system calls that are included in a predetermined subset of network related system calls are used by the user-defined program and determining that internet connectivity is required in response to identifying a system call is used by the user-defined program that is present in the subset of network related system calls.

In an example, the subset of network related system calls include any system call that accesses network resources and/or are used for communicating with an entity external to the HSM 11. In an example the network related system calls include, but are not limited to: socket(), bind(), listen(), accept(), connect(), send(), and recv(). In response to determining that at least one of the network related system calls is used by the user-defined program, it is determined that internet connectivity is required. If the user-defined program does not call any of the network related system calls, then it is determined that internet connectivity is not required. In this example, the network configuration is learned from the strace log - it will contain syscalls to re-quest network functionality from the kernel.

Steps 401, 402, 403, and 404 are shown in parallel in Fig. 4A, and these steps may be performed independently of each other. However, as has been described previously, the steps may overlap. For example, the "strace" tool may be run, and the output used to obtain some or all of the system calls, capabilities, devices and connectivity information. Furthermore, in some examples, one or more of steps 401, 402, 403 and 404 are performed without necessarily requiring all of steps 401, 402, 403 and 404 to be performed. In this case, the steps performed will determine the extent to which the configuration of the container on the HSM is controlled. For example, in the case where only step 401 is performed, then the container functionality would only be limited (further than a default configuration) in terms of the system calls that can be made by the program executing in the container.

After performing one or more of steps 401, 402, 403 and 404, the method proceeds to step 405.

Step 405 comprises generating container configuration information. In this example, step 405 is performed on the client device 117. Step 405 comprises generating a file comprising a representation comprising the system calls, the capabilities, the devices, and/or the internet connectivity status (depending on which of steps 401 - 404 are performed). In an example generating the desired container configuration information comprises combining one or more of: the system calls obtained from step 401, the capabilities obtained from step 402, the devices obtained in step 403, and/or the internet connectivity status obtained in step 404 into a single list.

The desired container configuration information generated in Fig. 4A is subsequently used when the user wants to initialise a container for executing the user-defined program. In particular, the container configuration information is provided to the HSM 11 by the user together with the user defined program to be executed and the request to initialize a particular container. The launcher service 210 then uses the container configuration information to generate a container configuration file 207, as will be described in more detail below.

Thus in an example process, the user creates a program, then runs a tool that runs the binary with strace, extracts container configuration information from the strace log and provides it into a format that the launcher service 210 can process. A request is then sent to the launcher service, with the container configuration information. In some examples, the user may modify the extracted container configuration information before it is sent to the HSM. For example, a user can supply a request for more syscalls than the program requires, but less syscalls than the default allows. In an alternative process, the container configuration information may be entirely user-specified.

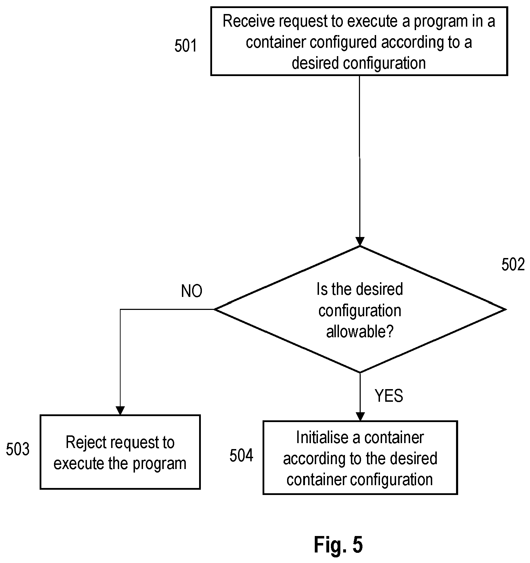

Fig. 5 shows a method of initialising a container according to an example. In an example the method of Fig. 5 is implemented by a HSM 11. The method may be performed by a HSM 11 as has been described previously for example. The HSM 11 stores program code (e.g. in non-transitory memory) that implements the steps of Fig. 5 - for example, the method of Fig. 5 is performed by the launcher service 210. Fig. 5 shows an example implementation of step S303 (processing the request for the container) in Fig. 3.

The method of Fig. 5 begins in step 501. In step 501 the method comprises receiving a request to execute a user-defined program in a container that is configured according to container configuration information. In an example, the desired container configuration information is generated by a user, for example as described in relation to Fig. 4A. The request comprises the container image comprising the user-defined program, and the container configuration information in this example.

The information identifying the desired container configuration (container configuration information) is provided as an argument of the request sent to the HSM 11. The request is transmitted by the client 117 to the HSM 11. As discussed above, the request also includes the container image, comprising the user-defined program.

The method proceeds to step 502 after receiving the request to execute the user-defined program in the container that is configured according to the desired container configuration.

In step 502 the method comprises determining if the desired container configuration (obtained in step 501) is allowable. In an example, determining whether the desired container configuration is allowable comprises determining whether the configuration specified in the container configuration information provided by the client is at least as strict (i.e. at least as restrictive) as a default whitelist of approved system calls, capabilities and devices stored on the HSM 11. In step 502 the desired container configuration is validated to determine whether the system calls, capabilities and/or devices that are requested are a subset of, or an exact set of, the default whitelist of system calls, capabilities and/or devices.

Step 502 comprises determining whether each of the system calls, capabilities, and/or devices present in the desired configuration (from step 501) are included in a whitelist of approved system calls, capabilities and/or devices. In an example the whitelist of approved system calls, capabilities and/or devices is pre-determined by a trusted party, for example the manufacturer of the HSM 11. It represents the system calls, capabilities and/or devices that the trusted party considers necessary and safe for use by a user-defined program executing in the container. The whitelist is stored on the HSM 11.

If it is determined in step 502 that the desired configuration specified in the container configuration information is not allowable, then the method proceeds to step 503 where the request to execute the container (received in step 501) is rejected. In an example, rejecting the request to generate the container comprises transmitting a message to the client 117, informing the client 117 that the request to execute the program in a container that is configured according to the desired configuration is unsuccessful.

If it is determined in step 502 that the desired configuration is allowable, then the method proceeds to step 504. In step 504 a container is initialised according to the container configuration information (received in step 501).

Initialising the container comprises generating a container configuration file 207 that includes the system calls, devices and/or capabilities specified in the container configuration information provided by the client 117. In an example, the generated container configuration file 207 comprises only the system calls, devices and/or capabilities specified in the container configuration information provided by the client 117 (as well as other configuration information). Generating a container configuration file 207 may comprise modifying a template container configuration file for example. The template container configuration file may be the default container configuration file.

The launcher service 210 validates the container configuration information against allowed syscalls, capabilities and devices and determines whether the requested container configuration information is a subset of, or the exact set of, the default whitelist of syscalls, capabilities, and devices in S502. If the launcher service 210 validates these items in S502, the requested container configuration information is used to generate a container configuration file 207 in S504. The container configuration file 207 is then provided to the container engine to start a container in which to run the user's program with the allowed syscalls, capabilities and devices. For example, the launcher service 201 generates a seccomp profile that specifies the allowed system calls. The launcher service 210 includes the seccomp profile in the container configuration file 207 in S504. This may involve modifying an LXC container configuration file to use the generated seccomp profile. The LXC container configuration file may also be modified to also only allow the enabled devices specified in the custom configuration information. For example, this may involve using cgroups - a Linux kernel feature. The LXC container configuration file may also be modified to according to the requested network configuration information. The configuration file 207 is then provided to the container engine. The syscalls, capabilities, devices and network availability are managed by the LXC container engine, where the LXC container engine calls the right functions from the OS kernel to set the container up. For example, the container engine generates a seccomp filter according to the seccomp profile in the configuration file. Once initialised according to the configuration, the user program is executed in the container.

The container configuration file 207 may be a Ixc.conf file for example. The allowed syscalls can be specified in a lxc.conf file by specifying Ixc.seccomp = "path/to/custom_syscalls.conf" for example.

As well as specifying the syscalls, capabilities, devices and network availability specified by the user, the configuration file may specify other configuration settings, for example other configuration settings that are not relevant to security. For example, the configuration file may also specify configuration settings that specify the memory and processing resources available to the container, for example settings applying restrictions to usage of RAM, CPU and other resources. These may be specified according to a default setting of the HSM for example.

Although in this example, a single container configuration file is described, in other examples, a container manifest comprising two or more container configuration files may be used to configure the container.

An example container configuration file based on a Ixc.conf file may comprise the following:

```
 # specify a restriction on the container
 # to utilise 1024 MB of total memory
 lxc.cgroup.memory.limit_in_bytes = 1024M
 # specify a restriction on the container
 # to not use any network connectivity
 lxc.net.0.type = empty
 #or none
 # specify custom location of seccomp whitelist:
 lxc.seccomp.profile = "path/to/file"
 # specify which linux capabilities to allow
 #"none" drops all linux capabilities
 1xc.cap.keep = none
 # specify restrictions on CPU share
 # and which devices are allowed
 lxc.cgroup.cpuset.cpus = 0,1
 lxc.cgroup.cpu.shares = 1234
 lxc.cgroup.devices.deny = a
 1xc.cgroup.devices.allow = c 1:3 rw
 lxc.cgroup.devices.allow = b 8:0 rw
 # to control access to entropy sources, as an example:
 lxc.cgroup.devices.allow = /dev/random 1:3 rw
```

Under this approach, the generated configuration file is always more restrictive or as restrictive as the default configuration file, and allows only those systems calls in both the default whitelist and the requested container configuration information for example.

As discussed above, the system calls that can be made by a process within a container are controlled by a system call filter - also referred to as a "seccomp" filter. The seccomp filter can restrict system calls based on a list of allowed calls. The system calls that the seccomp filter allows is specified by a filter profile - also referred to as the seccomp profile. Where the desired configuration specifies one or more system calls, step 504 comprises the launcher service 210 generating a seccomp profile specifying each of the one or more requested system calls. The seccomp profile is included in the configuration file 207. In an example, the seccomp profile contains only the one or more requested system calls. In an example, the seccomp profile is expressed in Berkeley Packet Filter (BPF) syntax. The container is initialised and the generated seccomp profile (comprising the one or more requested system calls that are allowable) is applied to the container. In particular, the container engine generates a seccomp filter according to the seccomp profile. The generated seccomp profile replaces a default seccomp profile comprising all of the allowed system calls on the whitelist. In this way, the system calls permitted by the container are at least as strict, if not more strict, than the default whitelist of system calls.

Restricting the system calls that can be made by a user-defined program within the container reduces the attack surface with which a user-defined program can attack the kernel and exploit the data (e.g. cryptographic keys) and the operation of the HSM 11. In particular, the attack surface is reduced when the container configuration is restricted to only those system calls that are required by a user-defined program because the number of permitted system calls is reduced and the ability of a malicious party to launch an attack on the kernel from within the container (e.g. by replacing the user-defined program with a malicious program) is mitigated since the container will only allow system calls that are used by the user-defined program.

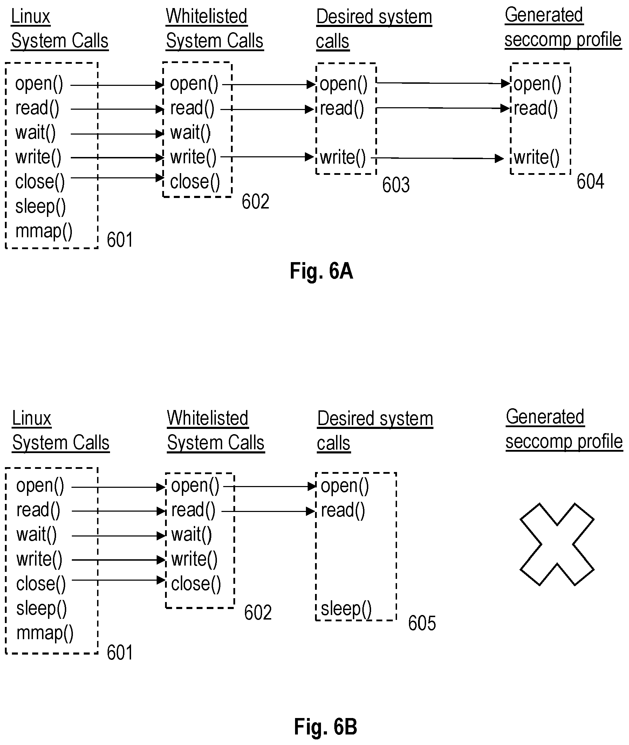

Fig. 6A illustrates a first example of restricting the system calls enabled by the container according to an example. Fig. 6A shows a first set of system calls 601. The first set of system calls 601 comprise the Linux system calls (i.e. the system calls supported by the Linux kernel). Fig. 6A also shows a second set of system calls 602. The second set of system calls 602 comprise the whitelisted system calls. In an example, the whitelisted system calls are the system calls that are considered to be safe and necessary for use by a user-defined program being executed by the HSM 11. As discussed above, the whitelisted system calls may be predetermined by a trusted party.

In step 501 of Fig. 5, a desired configuration of the container is obtained which comprises a list of desired system calls. The list of desired system calls is illustrated in Fig. 6A by a third set of system calls 603. This corresponds to container configuration information. As discussed above, it is determined in step 502 whether the desired configuration is allowable, e.g. by determining whether the system calls in the desired configuration are each included in the whitelist of system calls. If it is determined that the desired configuration is allowable then a system call filter configuration (e.g. a seccomp profile) is generated in step 504 comprising only the desired system calls. In this case the system call filter will then only allow system calls that are both safe (i.e. on the "whitelist") and required (i.e. used by the user-defined program) to be routed through the filter.

In the example of Fig. 6A, each of the desired system calls is included in the whitelisted system calls. Consequently, a system call filter configuration (e.g. a seccomp profile) is generated that contains only the desired system calls. A fourth set of system calls 604 shows the system calls that are permitted (i.e. not blocked) by the system call filter in the container. As can be seen from Fig. 6A, the fourth set of system calls 604 is a sub-set of the whitelisted system calls.

This reduces the attack surface because the container executing the program no longer allows more system calls to be made than are strictly necessary to execute the program. Furthermore, this approach provides reassurance that the program being executed in the container on the HSM 11 is the same program that was intended to be run in the container on the HSM 11. In particular, the system call filter is configured based on the intended program. Consequently, a rogue program may not execute to completion because it may contain one or more system calls that will not pass through the system call filter - even if the different system call is a "safe" system call included on the default whitelist of system calls.

Returning to Fig. 5, if it is determined in step 502 that the desired configuration is not allowable, then the method proceeds to step 503 where the request to execute the program in the container is rejected.

Fig. 6B illustrates a second example of restricting the system calls enabled by the container according to an example. In particular, Fig. 6B shows the first set of system calls 601 comprising the Linux system calls (i.e. the system calls supported by the Linux kernel). Fig. 6B also shows the second set of system calls 602 comprising the whitelisted system calls. The second set of system calls 602 are a subset of the first set of system calls 601. Fig. 6B also shows a fifth set of system calls 605. The fifth set of system calls 605 correspond to the desired system calls, and comprises a system call (namely the "sleep()" system call) that is not in the second set of system calls 602 (i.e. is not an approved whitelisted system call). Following the method of Fig. 5, in step 502 it is determined that the desired configuration is not allowable, since the requested desired configuration contains a system call that is not included in the whitelisted system calls. Consequently, in this example the method proceeds to step 503 where the request to execute the program in the container is rejected, as illustrated in Fig. 6B by the absence of a generated system call filter profile. In an example rejecting the request to execute the program in the container comprises transmitting an error response from the HSM 11 to the client 117. In this case the program is not executed by the HSM 11. If there is a command used by the program that is not on the whitelist, an error is returned to the user and the container is not launched.

In an alternative example, after determining that the desired configuration contains system calls that are not present in the default whitelist (i.e. the desired configuration is not allowable) a message is transmitted to the client 117 from the HSM 11 informing a user that the desired container configuration contains un-allowed system calls and requesting an indication of whether the user wishes to proceeds. If the user wishes to proceed then a system call filter configuration (e.g. a seccomp profile) is generated that includes only the system calls that are present in both the default whitelist of system calls and the desired system calls, and the container initialized accordingly. If the program (during its execution) attempts to make a system call that the system call filter (seccomp filter) will not allow to pass to the Operating System, an error will be generated and further execution of the user-defined program will be prevented, causing the program to crash. If on the other hand the user declines to run the container then the program is not executed. In this example, the launcher service 210 generates a container configuration file 207 by obtaining the "whitelist" of default system calls stored on the HSM 11, determining the system calls that are both in the "whitelist" and in received container configuration information, and generating a seccomp profile (included in the container configuration file 207) that only allows those system calls.

As discussed above, in addition to the system calls, the devices accessible to the process within the container can also be restricted. In the case that the requested container configuration information comprises information identifying a set of one or more devices, step 502 comprises determining whether the requested devices can be used by the user-defined program (i.e. are included in a whitelist of the allowed devices).

In response to determining that the requested devices can be used by the user-defined program, the method proceeds to step 504 where a container configuration file is generated. For example, a template container configuration file is modified to include the devices specified in the desired configuration. The template container configuration file is modified to include only the devices specified in the desired configuration that are also present in the whitelist devices. In this way, the container that is launched for executing the user-defined program is restricted from accessing all of the devices available to the HSM 11, thereby reducing the opportunity for a user-defined program executing within the container to compromise the security of the rest of the HSM 11.

In an example, the device disk "/dev/disk0/" is mounted by the HSM 11 and considered to be safe for access by a user-defined program and so is included in the whitelisted devices. In an example, the desired configuration includes the device disk "/dev/disk0/". Since this device is included in both the desired configuration and the whitelist of devices, a container configuration file is generated that specifies access to the device disk "/dev/disk0" and the container is initialised according to that container configuration file. Generating the container configuration file may comprise including instructions in the container configuration file to mount the disk (e.g. "/dev/disk0") in the container's file system, thereby making the files of "/dev/disk0" available to the program being executed in the container. It will be appreciated that in other examples, the mount instructions that are included in the container configuration file could also change the name of the file system within the container. For example, "/dev/disk0" in the OS file system could be named "/dev/main_disk" in the container. In this way, the restriction and control of a system device, in this example a device disk (/dev/disk0/), is provided.

The desired configuration can also specify Linux capabilities that are requested for processes executing in the container. Linux divides the privileges associated with a super-user into distinct units, known as capabilities. Consequently, the container can be configured so processes executing in the container can perform operations that would normally be associated with the highest privilege level (i.e. a super user). In an example the desired configuration comprises the desired Linux capabilities, and the desired Linux capabilities are compared to a whitelist containing allowed Linux capabilities for the processes executing within the container. In response to determining that the desired Linux capabilities are each included in the whitelisted Linux capabilities, then all of the Linux capabilities in the desired configuration are added to the container configuration file, which is subsequently used to initialise the container. If a desired Linux capability is not present in the whitelisted Linux capabilities, then the request to generate a container is rejected in this example (step 503).

In the examples above, the desired devices/system calls/capabilities are compared to a list of whitelisted devices/system calls/capabilities in order to generate the container configuration. In an example, the internet connectivity is not checked against a whitelist. As discussed above, whether internet connectivity is required by the program can only either be yes or no. In this example, both of these are considered legitimate states. In this case the desired internet connectivity configuration is reflected in the initialised container. The container will only be set up with internet connectivity if it is required by the user-defined program or desired by the user. Consequently the attack surface will be limited to only the requirements of a legitimate program.

In response to determining that the desired container configuration indicates that there is not to be internet connectivity (i.e. internet connectivity = no) then the container is configured such that all network related system calls and capabilities are disabled. In a specific example where the container engine is implemented using LXC, in response to determining that the container has no internet connectivity, the launcher service 210 generates a configuration file with all the network system calls and network capabilities disabled (e.g. by adding an entry to the configuration file of: --network = "none").

In an example where internet connectivity is requested in the desired container configuration, then initialising the container according to the desired container in step 504 comprises adding a default network configuration to the container configuration, for example, by adding a default network specifying that a network port in the container is bridged to an OS network port that is connected to the internet. If internet connectivity is not required, then a bridge is not added to the internet connected network port, thereby initialising a container without access to the internet....

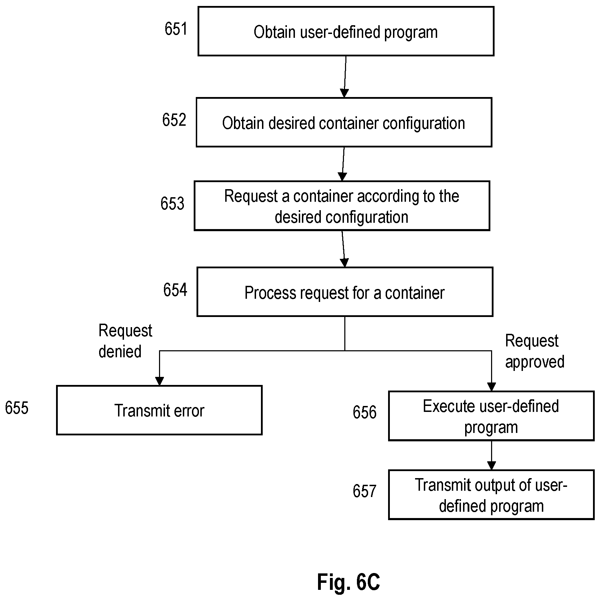

Fig. 6C shows a method of executing a user-defined program on a HSM 11 according to an example. In step 651 the client 117 obtains a user-defined program. In the following example the user-defined program comprises program code for performing a cryptographic operation such as generating and verifying a digital signature. In this example the user-defined program is configured to obtain data to be signed and a cryptographic key, and is configured to generate a digital signature based on the data and the cryptographic key. The digital signature can subsequently be used to verify the integrity of the data. After obtaining the user-defined program, the method proceeds to step 652.

In step 652 the client 117 obtains the desired container configuration. In an example step 652 of obtaining the desired container configuration is performed according to the methods of Fig. 4A, 4B and 4C discussed above. After obtaining the desired container configuration in step 652, the method proceeds to step 653.

In step 653 the client transmits a request to the HSM 11 to initialise a container according to the desired configuration. In an example, step 653 is performed according to step S302 of Fig. 3. In an example the request to initialise a container according to the desired container configuration comprises the desired container configuration information and the container image comprising the user-defined program to be executed in the container. Alternatively, the request comprises information identifying a container image stored on the HSM, the user-defined program, and the container configuration information.

In step 654 the HSM 11 processes the request for the container. In an example the request for the container is processed according of Fig. 5. As discussed above when step 502 is present in the method of Fig. 5 (i.e. when a determination is made as to whether the desired configuration is allowable), then step 654 comprises either: 1) rejecting the request to generate a container (e.g. as per step 503) or 2) initialising the container according to the desired configuration (e.g. as per step 504). After processing the request to initialise the container in step 654 the method proceeds to either step 655 of 656 based on this determination.

If the request to generate a container is rejected in step 654 then an error is transmitted from the HSM 11 to the client 117 in step 655. In this case the method stops and the user-defined program (which, in this example, involves performing a cryptographic operation) is not executed on the HSM 11. As discussed above, this could occur for example when the user-defined program for performing the cryptographic operation uses a system call that is not allowed to be used on the HSM 11. As discussed above, in some alternative examples, the container may be initialized with only the desired configuration settings permitted by the whitelist.

If the desired configuration is allowable then the container is initialised according to the desired configuration and the user-defined program is executed in the container in step 656. In this example the HSM 11 performs the cryptographic operation, e.g. generating a digital signature for the data using the cryptographic key. The method proceeds to step 657 after the user-defined program has finished executing in step 656.

In step 657 an indication is transmitted from the HSM 11 to the client 117 that the user-defined program has completed execution. Optionally, the indication transmitted by the client 117 comprises the output of the program, e.g. the digital signature generated by executing the user-defined program on the HSM 11. Although in the examples above, the user-defined program comprises a program for generating a digital signature, different programs could be used.

In the above described examples, a step of comparing the desired configuration against a default whitelist is performed, as described in relation to step 502 for example. However, in alternative examples, there is no determination whether the desired configuration is allowable, and a container is simply initialised with a configuration that only includes the configurable properties that are present in both the default whitelist and the desired container configuration. Where the user-defined program attempts to make one or more system calls that are not part of the whitelisted configuration, the container will not execute the user-defined program to completion and will transmit an error to the client 117 part-way through execution.

It is possible that it could be days, months or years before the program executing in the container is terminated. The custom configuration is maintained whilst the container is running. In some cases it may become apparent that one of the whitelisted configuration settings (e.g. whitelisted system calls, devices, capabilities etc.) that was once considered safe, is no longer safe. For example, due to a recently identified vulnerability (e.g. a zero-day attack). In light of this there is provided a method for dynamically updating a container configuration.

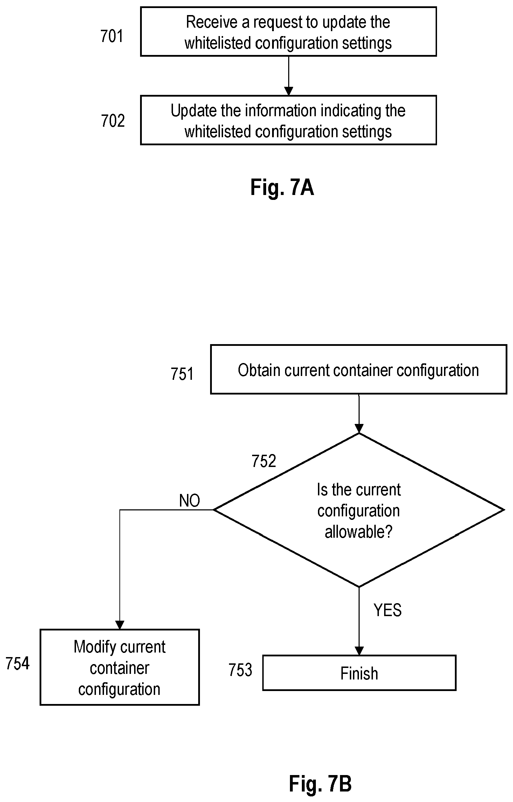

Fig. 7A shows a first method of updating the whitelisted configuration settings according to an example. In the examples above, the HSM 11 receives a desired container configuration from a client 117 and the HSM 11 then determines whether the desired configuration is a set (optionally a subset) of the default whitelisted configuration settings, to determine whether the desired configuration is at least as strict as the default, whitelisted configuration. The HSM 11 stores information identifying the default whitelisted configuration settings. Once a vulnerability has been identified, the default whitelisted configuration settings may be updated by a trusted party, to prevent the use of the vulnerable configuration settings in the future.

In step 701 the HSM 11 receives a request to update the default whitelisted configuration settings. In an example the request comprises the updated default whitelist configuration settings. The update in S701 is requested by a trusted party. The identity of the party requesting the update is validated at the HSM 11. The method proceeds to step 702.

In step 702 the HSM 11 updates the default whitelist of configuration settings according to the updated default whitelist received in step 701. In this way, all future requests to initialise a container according to a desired configuration will have to satisfy the requirements of the updated default whitelist (which does not contain the vulnerable configuration setting).

As discussed above, there may be times when a container is already running on the HSM 11 while an update to the whitelisted configuration settings occurs. Consequently a container could still be running that had been validly initialised with access to the vulnerable configuration setting (e.g. access to the vulnerable system call).

Fig. 7B shows a method of dynamically updating a container configuration according to an example. In an example, the method of Fig. 7B is performed for each active container on the HSM 11 after the method of Fig. 7A has been performed. The method begins in step 751.

In step 751 the current container configuration associated with the active container is obtained. For example, when the container gets initialised according to a desired container configuration, this configuration is saved in the file system of the HSM 11. This configuration is subsequently retrieved in step 751. After obtaining the current container configuration the method proceeds to step 752.

In step 752 it is determined whether the current configuration is allowable based on the updated default whitelist information. In an example, determining whether the current configuration is allowable comprises determining whether the current configuration only includes configuration parameters (e.g. system calls, capabilities, and devices) that are included in the updated default whitelist. A similar check is performed in step 752 as discussed in relation to step 502 of Fig. 5.

If it is determined in step 752 that the current configuration is allowable, then the method proceeds to step 753 where the method finishes. In this case, when the container was initialised, its configuration was already restricted to a configuration that is at least a set, optionally a subset, of the updated default whitelisted configuration settings. Consequently, in this case no changes are required to the container configuration because it is already at least as restrictive as the updated whitelist - it is not effected by the identified vulnerability because it did not utilise that configuration.

If it is determined in step 752 that the current configuration is not allowable then the current configuration of the container is modified in step 754.

In a first approach, modifying the current configuration of the container comprises identifying the configuration parameter to be changed and then updating the configuration of the container instance. For example, this may involve using the "lxc config device remove" command to remove a device which was once whitelisted, but now is not present in the updated whitelist.

In a second approach, the container instance is paused, the configuration of the container is updated and the container operation is then resumed. In another example the state of the processes in the container is saved, the container is then stopped, and a new container is generated with the saved state and the updated configuration settings.

In an example where the desired container configuration was generated based on the user-defined program being executed in the container, the act of changing the configuration of the container to remove the access to the vulnerable configuration may mean that, at some point, the user-defined program being executed in the container will make an attempt to access the vulnerable resource (e.g. by attempting to access the vulnerable device, or by attempting to use the vulnerable system call). In this case, the container will block such a request and an error will be generated, preventing a user-defined program from potentially exploiting a resource that is known to be vulnerable.

Alternatively, upon determining that the already-initialised container has a configuration that allows access to the vulnerable parameter (e.g. allows access to the vulnerable device or allows the vulnerable system call to be made), and upon determining that the desired container configuration was based on the program being executed in the container, then the container is stopped and removed. In this case, the program being executed in the container is no longer suitable for being executed on the HSM (because it requires access to a vulnerable command/device) and so the container and the program executing in the container is stopped, instead of waiting for an error as in the example above.

In examples where the desired container configuration is not directly linked to the program being executed (e.g. the desired configuration is arbitrarily selected by the user - for example according to a regulatory requirement), then applying the method of Fig. 7B reduces the attack surface available to a user-defined program and enables a more secure HSM 11.

In an example the method of Fig. 7B is performed for each active container running on the HSM 11.

In the above described example, the container configuration is updated based on updated default whitelist information. However, in other examples, a user can send updated desired container configuration information. The container corresponding to the updated container configuration information provided by the user may be dynamically updated in the same manner as described in relation to Fig. 7B. The updated container configuration information provided by the user may include a further reduction in allowed syscalls, capabilities or devices. It is validated at the HSM that the updated desired container configuration information is provided by the user associated with the container. For example, the updated desired container configuration information is provided via the first secure channel.

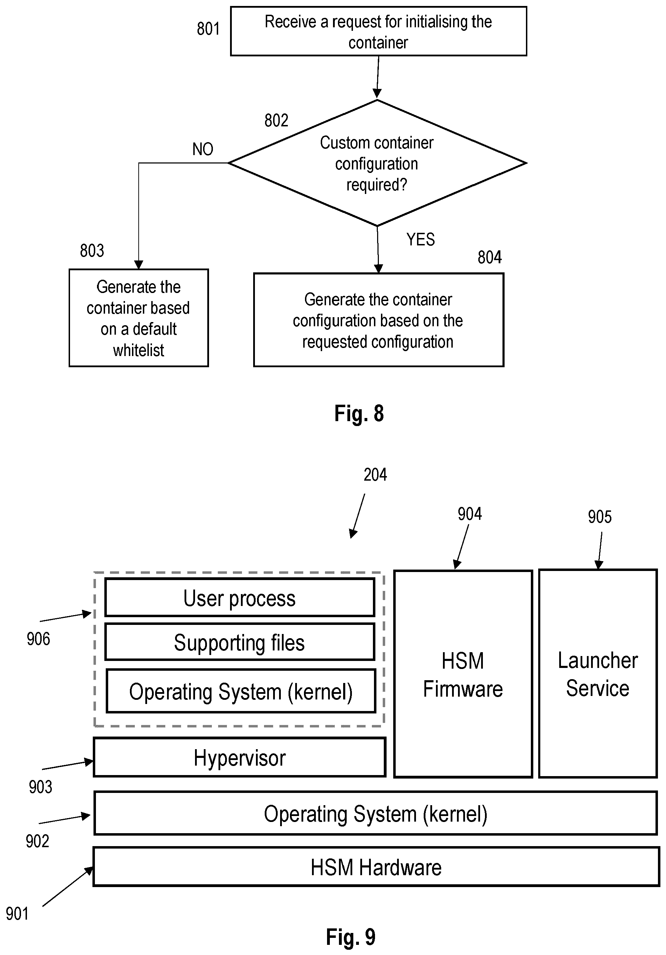

Fig. 8 shows a method performed by a device according to an example. The method may be performed by a HSM 11 as has been described previously. In this example, a request transmitted by the client 117 to the HSM 11 in step S302 comprises an indication of whether a custom container configuration is required. For example the indication that a custom container configuration is required may be the presence of the information specifying the desired container configuration and the indication that a customer container configuration is not required is the absence of such information. In another example the indication that a custom container configuration is required is contained within a separate field in the request.

In step 801 the HSM 11 receives a request for initialising a container, the request containing an indication of whether a custom container configuration is required. The method proceeds to step 802. In step 802 it is determined whether a custom container configuration is required. If a custom configuration is not required then the method proceeds to step 803, where the container is initialised according to the default whitelisted configuration settings that are stored on the HSM 11. If it is determined that a custom configuration is required then the method proceeds to step 804 where the container is initialised based on the container configuration and the whitelist as discussed in relation to Fig. 5.

In an example the HSM 11 is configured to perform the method of Fig. 8 and Fig. 7B. In this case, although the container configuration may not be limited by the program being executed in the container or by a user-specified configuration, the system would still be able to respond dynamically to new vulnerabilities, since in this case, the default container configuration used in step 803 would be limited to remove access to the vulnerable device/system call/capability.

In this example, the whitelist is the default configuration and will be used unless a user provides modifications to this list. The user transmits a launch container command. The command contains an indication of whether the default container is to be used. If a custom configuration is to be used, the command contains the custom configuration information. Thus in this example, including an amended configuration is an optional feature that can be enabled by a user. Some users may run their programs with the defaults, on the understanding that the trusted party has enabled safe defaults. Other users who wish to reduce their exposure and attack surface customize the container configuration to further reduce risk.

In the above described examples, the client 117 sends the configuration settings to the HSM 11 via a first secure channel. In one example, the first secure channel is established using the SSH protocol. A first SSH key pair comprises a first private key at the client system 117, and a first public key stored at the HSM 11 and accessible to the launcher service. Similarly, a second SSH key pair comprises a second private key stored at the HSM 11 and accessible to the launcher service. The client device 117 uses the Secure Shell (SSH) protocol for communicating commands to the launcher service in the hardware security module 11. The client device 117 comprises a SSH process, also referred to as an SSH client. This process is a running instance of a program which uses the secure shell protocol to connect to a remote device, in this case the launcher service in the HSM device 11. The private half of the first SSH key pair is loaded into the memory space of the SSH process at the client device 117. The public half of the second SSH key pair is also loaded into the memory space of the SSH process at the client device 117.The HSM 11 also runs a SSH process, referred to as a first SSH server 208. This process is a running instance of a program which uses the secure shell protocol to accept a connection from the client system 117. The private half of the second SSH key pair is loaded into the memory space of the SSH process. The public half of the first SSH key pair is also loaded into the memory space of the SSH process.

A request to establish the secure connection is transmitted from the client device 117 to the hardware security module 11. The request comprises connection information. The connection information may include the client network address. It may further comprise information about the client identity, for example a username. Both the SSH client on the client device and the first SSH server 208 in the HSM 11 have a corresponding network address. These are used to ensure the SSH protocol's messages are delivered to the expected processes. At least part of the connection information sent from the client to the launcher service 210 is signed with the first private key. The first SSH process 208 running in the HSM 11 validates the signature using the first public key. If the signature is not validated, the connection is denied and an error message sent to the client system. If the HSM 11 confirms the connection, i.e. the client is authenticated, the HSM 11 generates a response. The response includes the client network address so that it can be routed correctly. At least part of the response is signed with the second private key. The response is transmitted from the HSM device 11 to the specified client system 117. The SSH process running in the client system validates the signature using the second public key. If the signature is not validated, the connection is denied and an error message sent to the container. If the connection is validated by both the HSM 11 and the client system, a communication encryption key is then generated and exchanged between the HSM 11 and the client system 117. This key is then used to encrypt communications between the client system 117 and the launcher service 210 running on the HSM 11.

In the examples above, reference is made to a user-defined program, however any program that is intended to be run in the container can be used in the methods described herein, whether or not it is defined by the user that wants to run it on the HSM 11.

In the description above, the techniques are described in relation to a HSM 11 running a Linux Operating System (OS). However, the same techniques can be applied to other Operating Systems.

In the examples above reference is made to a container. As discussed above, a container is a standalone unit of software that packages up code and all its dependencies so the application runs quickly and reliably from one computing environment to another. A container is an example of a sandboxed environment or an isolated environment for execution of a program. Other examples of isolated environments may be used however, for example a virtual machine.

Fig. 9 shows an example software stack running on a HSM. In particular, Fig. 9 shows an example software stack where the isolated environment for executing the user-defined programs is provided by a Virtual Machine (VM). Fig. 9 shows a Hardware Security Module comprising HSM hardware 901 (e.g. physical hardware/comprising for storing and manipulating data). The HSM also comprises an Operating System 902 that provides an interface to the HSM hardware 901 and runs on the HSM hardware 901. The OS kernel 902 runs a hypervisor 903, a launcher service 904, and the HSM main application 905 as separate processes.

In the example of Fig. 9, the isolated environment for executing user-defined programs is provided by a virtual machine 906. The interface between the virtual machine 906 and the HSM hardware 901 is the Hypervisor 903. In the example of Fig. 9 the Hypervisor is a Type 2 hypervisor, meaning it operates on top of an operating system. However, for the avoidance of doubt it is emphasized that the same techniques described herein could be used with Type 1 hypervisors, where the hypervisor operates directly on the HSM Hardware 901.

The virtual machine 906 comprises a set of one or more processes that are isolated from the rest of the system. In this case, a separate kernel runs in each virtual machine. The virtual machine 906 comprises the user process, the supporting files for this process and the kernel. The hypervisor 903 comprises software that creates and runs the virtual machines, and acts as an intermediary between the virtual machine 906 and the HSM hardware 901.

The HSM main application 905 operates in the same way as described above. The Launcher service 905 operates in a similar way as described above. However, instead of launching a container with the desired configuration, the launcher service 905 launches a virtual machine 906 where the desired configuration, e.g. the system calls that can be made by the virtual machine 906, are controlled by the Hypervisor 903. For example, the hypervisor 903 is configured to enforce the desired configuration, e.g. by trapping system calls from the virtual machine 906 and determining whether the system call is permitted according to the configuration, and if permitted, transmitting the system call to the operating system and the HSM hardware. The user-defined program is executed in the virtual machine.

The above described methods include customised restriction of container-based applications, or applications based in other isolated environments. There may be instances where assurance that a user-defined program is being executed in accordance with a regulatory or compliance regime is required. By providing custom configuration settings, a user may have assurance that the program is being executed in accordance with a regulatory requirement. Container-based execution of user-defined programs may use the same whitelist of allowed system calls, network connections and devices for each container. There may be instances where this list is not appropriate however, especially where there are different tenants on the HSM that are operating under different regulatory requirements. By allowing restriction of the configuration of a container based on its use case, for example the regulatory regime it is operating under and the system calls used by the program it is executing, compliance with regulatory requirements may be provided and the attack surface reduced in a scalable way.

In the above described examples, the client 117 obtains information indicating a desired container configuration - also referred to as the container configuration information - and provides this information to the HSM. However, in other examples, the client 117 may simply provide the user-defined program. The HSM may then generate the container configuration information from the user-defined program, for example by running the "strace" facility on the HSM.

In the above described methods, the container is customised according to its use requirements. The user generates information identifying the custom configuration and transmits a command to the HSM to start the container. The command contains the custom configuration information. The launcher service on the HSM receives the command containing the custom configuration information and generates a container configuration file. The launcher service then initialises the container according to the configuration file, and the user-defined program is executed within the container. This may provide a secure implementation, with a reduced attack surface, i.e. a reduced opportunity to exploit a vulnerability of the HSM, while executing user code. The policy can also be reconfigured to respond to new threats. The method provides the ability to launch customised containers that restrict the system calls, network devices or capabilities of the container. A user can therefore ensure that the program is being executed in accordance with a regulatory requirement. This reduces the attack surface that a malicious user-defined program could exploit, for example.

Even removing a single kernel system call may provide improved security. For example, profiling the user-defined program may indicate that it does not use a first system call. The container is therefore initialised with a seccomp profile that does not include the first system call. If the program is compromised, an attacker may include functionality in the program that calls the first system call. If executed, this functionality may cause a catastrophic failure to the entire HSM. Reducing the container configuration to remove the first system call thus avoids a full compromise of the HSM, and may result in a more contained compromise of just the user's program for example. The container is a possible source of attacks against the HSM - for example, an attacker might compromise the container to then extract sensitive data, e.g. keys, from the HSM. By controlling the configuration settings of the container, the HSM may be protected from the container. For example, system calls for network functionality may be included in the whitelist, but not needed for the user's program. If the users program is compromised, an attacker may include network-related system calls to compromise the entire OS kernel.

The methods provide a safe secure execution environment (SEE) using a trusted platform, for example a HSM. In particular, the SEE is isolated from impacting the security functionality of the HSM's trusted computing base. However, the application still benefits from operating within the hardened environment of the HSM.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A computer-implemented method comprising:
obtaining configuration information for an isolated execution environment (203);
obtaining a program;
initialising an isolated execution environment based on the configuration information; and
executing the program in the isolated execution environment, wherein the isolated execution environment isolates the program from a main
application;
wherein the method further comprises:
receiving updated configuration information;
determining whether the current configuration of the isolated execution environment is at least as restrictive as the updated configuration; and
in response to determining that the current configuration is not as restrictive as the updated configuration, updating the configuration of the isolated execution environment.

2. A method according to claim 1, further comprising:
determining whether the configuration information specifies a configuration at least as restrictive as an approved configuration of the isolated execution environment; and
initialising the isolated execution environment in response to determining that the configuration is at least as restrictive as the approved configuration.

3. The method according to any preceding claim, wherein the configuration information specifies an indication of internet connectivity.

4. The method according to any preceding claim, wherein the configuration information comprises information specifying configuration items relevant to security.

5. The method according to claim 4, wherein receiving updated configuration information comprises receiving an updated approved configuration.

6. The method according to any preceding claim, wherein determining whether the configuration information specifies a configuration at least as restrictive as an approved configuration comprises determining whether the configuration information specifies only configuration settings that are included in the approved configuration.

7. The method according to claim 6, wherein the configuration information specifies a first system call, the approved configuration comprises a plurality of allowed system calls and wherein determining whether the configuration information specifies only configuration settings that are included in the approved configuration comprises determining whether the plurality of allowed system calls comprises the first system call.

8. The method according to any preceding claim, wherein the configuration information specifies at least one of: a system call, a device or a system capability used by the program during execution.

9. The method according to claim 8, wherein the configuration information specifies a system call, and wherein the configuration information is generated by:
obtaining a compiled version of the program; and
determining a system call that is made during execution of the compiled version of the program.

10. The method according to claims 8 or 9, wherein the configuration information specifies an indication of whether internet connectivity is required and wherein the configuration information is generated by:
obtaining a compiled version of the program;
determining a system call that is made during execution of the compiled version of the program;
determining whether the system call is a network-related system call; and
setting the indication that internet connectivity is required in response to determining that the system call is a network-related system call.

11. The method according to any preceding claim, wherein obtaining configuration information for an isolated execution environment comprises receiving, from a user device, a request to initialise a container for execution of the program, the request comprising the configuration information.

12. A carrier medium comprising computer readable code configured to cause a computer to perform the method any of claims 1 to 11.

13. A device (11), comprising one or more processors (103) configured to:
obtain configuration information for an isolated execution environment (203);
obtain a program;
initialise an isolated execution environment based on the configuration information; and
execute the program in the isolated execution environment, wherein the isolated execution environment isolates the program from a main application;
wherein the one or more processors are further configured to:
receive updated configuration information;
determine whether the current configuration of the isolated execution environment is at least as restrictive as the updated configuration; and
in response to determining that the current configuration is not as restrictive as the updated configuration, update the configuration of the isolated execution environment.

14. The device according to claim 13, wherein the device is a hardware security module device.

## Patentansprüche

1. Computerimplementiertes Verfahren, umfassend:
Erhalten von Konfigurationsinformationen für eine isolierte Ausführungsumgebung (203);
Erhalten eines Programms;
Initialisieren einer isolierten Ausführungsumgebung basierend auf den Konfigurationsinformationen; und
Ausführen des Programms in der isolierten Ausführungsumgebung, wobei die isolierte Ausführungsumgebung das Programm von einer Hauptanwendung isoliert;
wobei das Verfahren ferner Folgendes umfasst:
Empfangen aktualisierter Konfigurationsinformationen;
Bestimmen, ob die aktuelle Konfiguration der isolierten Ausführungsumgebung mindestens so restriktiv ist wie die aktualisierte Konfiguration; und
infolge eines Bestimmens, dass die aktuelle Konfiguration nicht so restriktiv ist wie die aktualisierte Konfiguration, Aktualisieren der Konfiguration der isolierten Ausführungsumgebung.

2. Verfahren nach Anspruch 1, ferner umfassend:
Bestimmen, ob die Konfigurationsinformationen eine Konfiguration angeben, die mindestens so restriktiv ist wie eine genehmigte Konfiguration der isolierten Ausführungsumgebung; und
Initialisieren der isolierten Ausführungsumgebung infolge eines Bestimmens, dass die Konfiguration mindestens so restriktiv ist wie die genehmigte Konfiguration.

3. Verfahren nach einem vorstehenden Anspruch, wobei die Konfigurationsinformationen einen Hinweis auf eine Internetverbindung angeben.

4. Verfahren nach einem vorstehenden Anspruch, wobei die Konfigurationsinformationen Informationen umfassen, die Konfigurationselemente angeben, welche für die Sicherheit relevant sind.

5. Verfahren nach Anspruch 4, wobei Empfangen aktualisierter Konfigurationsinformationen ein Empfangen einer aktualisierten genehmigten Konfiguration umfasst.

6. Verfahren nach einem vorstehenden Anspruch, wobei Bestimmen, ob die Konfigurationsinformationen eine mindestens ebenso restriktive Konfiguration wie eine genehmigte Konfiguration angeben, Bestimmen umfasst, ob die Konfigurationsinformationen nur Konfigurationseinstellungen angeben, die in der genehmigten Konfiguration beinhaltet sind.

7. Verfahren nach Anspruch 6, wobei die Konfigurationsinformationen einen ersten Systemaufruf angeben, die genehmigte Konfiguration eine Vielzahl zulässiger Systemaufrufe umfasst und wobei Bestimmen, ob die Konfigurationsinformationen nur Konfigurationseinstellungen angeben, die in der genehmigten Konfiguration beinhaltet sind, ein Bestimmen umfasst, ob die Vielzahl zulässiger Systemaufrufe den ersten Systemaufruf umfasst.

8. Verfahren nach einem vorstehenden Anspruch, wobei die Konfigurationsinformationen mindestens eines des Folgenden angeben: einen Systemaufruf, eine Vorrichtung oder eine Systemfunktion, die vom Programm während der Ausführung verwendet wird.

9. Verfahren nach Anspruch 8, wobei die Konfigurationsinformationen einen Systemaufruf angeben und wobei die Konfigurationsinformationen durch Folgendes erzeugt werden:
Erhalten einer kompilierten Version des Programms; und
Bestimmen eines Systemaufrufs, der während der Ausführung der kompilierten Version des Programms erfolgt.

10. Verfahren nach Anspruch 8 oder 9, wobei die Konfigurationsinformationen einen Hinweis angeben, ob Internetkonnektivität benötigt wird, und wobei die Konfigurationsinformationen durch Folgendes erzeugt werden:
Erhalten einer kompilierten Version des Programms;
Bestimmen eines Systemaufrufs, der während der Ausführung der kompilierten Version des Programms erfolgt;
Bestimmen, ob es sich bei dem Systemaufruf um einen netzwerkbezogenen Systemaufruf handelt; und
Festlegen des Hinweises, dass Internetverbindung benötigt wird, infolge eines Bestimmens, dass es sich bei dem Systemaufruf um einen netzwerkbezogenen Systemaufruf handelt.

11. Verfahren nach einem vorstehenden Anspruch, wobei Erhalten von Konfigurationsinformationen für eine isolierte Ausführungsumgebung ein Empfangen, von einer Benutzervorrichtung, einer Anforderung umfasst, einen Container zur Ausführung des Programms zu initialisieren, wobei die Anforderung die Konfigurationsinformationen umfasst.

12. Trägermedium, das computerlesbaren Code umfasst, der so konfiguriert ist, dass er einen Computer veranlasst, das Verfahren nach einem der Ansprüche 1 bis 11 durchzuführen.

13. Vorrichtung (11), das einen oder mehrere Prozessoren (103) umfasst, die für Folgendes konfiguriert sind:
Erhalten von Konfigurationsinformationen für eine isolierte Ausführungsumgebung (203);
Erhalten eines Programms;
Initialisieren einer isolierten Ausführungsumgebung basierend auf den Konfigurationsinformationen; und
Ausführen des Programms in der isolierten Ausführungsumgebung, wobei die isolierte Ausführungsumgebung das Programm von einer Hauptanwendung isoliert;
wobei der eine oder die mehreren Prozessoren ferner für Folgendes konfiguriert sind:
Empfangen aktualisierter Konfigurationsinformationen;
Bestimmen, ob die aktuelle Konfiguration der isolierten Ausführungsumgebung mindestens so restriktiv ist wie die aktualisierte Konfiguration; und
infolge eines Bestimmens, dass die aktuelle Konfiguration nicht so restriktiv ist wie die aktualisierte Konfiguration, Aktualisieren der Konfiguration der isolierten Ausführungsumgebung.

14. Vorrichtung nach Anspruch 13, wobei es sich bei der Vorrichtung um eine Hardware-Sicherheitsmodulvorrichtung handelt.

## Revendications

1. Procédé mis en œuvre par ordinateur comprenant :
l'obtention d'informations de configuration pour un environnement d'exécution isolé (203) ;
l'obtention d'un programme ;
l'initialisation d'un environnement d'exécution isolé sur la base des informations de configuration ; et
l'exécution du programme dans l'environnement d'exécution isolé, dans lequel l'environnement d'exécution isolé isole le programme d'une application principale ;
dans lequel le procédé comprend en outre :
la réception d'informations de configuration mises à jour ;
la détermination si la configuration actuelle de l'environnement d'exécution isolé est au moins aussi restrictive que la configuration mise à jour ; et
en réponse à la constatation que la configuration actuelle n'est pas aussi restrictive que la configuration mise à jour, la mise à jour de la configuration de l'environnement d'exécution isolé.

2. Procédé selon la revendication 1, comprenant en outre :
la détermination si les informations de configuration spécifient une configuration au moins aussi restrictive qu'une configuration approuvée de l'environnement d'exécution isolé ; et
l'initialisation de l'environnement d'exécution isolé en réponse à la détermination que la configuration est au moins aussi restrictive que la configuration approuvée.

3. Procédé selon une quelconque revendication précédente, dans lequel les informations de configuration spécifient une indication de connectivité Internet.

4. Procédé selon une quelconque revendication précédente, dans lequel les informations de configuration comprennent des informations spécifiant des éléments de configuration pertinents pour la sécurité.

5. Procédé selon la revendication 4, dans lequel la réception d'informations de configuration mises à jour comprend la réception d'une configuration approuvée mise à jour.

6. Procédé selon une quelconque revendication précédente, dans lequel la détermination si les informations de configuration spécifient une configuration au moins aussi restrictive qu'une configuration approuvée comprend la détermination si les informations de configuration spécifient uniquement des paramètres de configuration qui sont inclus dans la configuration approuvée.

7. Procédé selon la revendication 6, dans lequel les informations de configuration spécifient un premier appel système, la configuration approuvée comprend une pluralité d'appels système autorisés et dans lequel la détermination si les informations de configuration spécifient uniquement des paramètres de configuration inclus dans la configuration approuvée comprend la détermination si la pluralité d'appels système autorisés comprend le premier appel système.

8. Procédé selon une quelconque revendication précédente, dans lequel les informations de configuration spécifient au moins un parmi : un appel système, une capacité de dispositif ou de système utilisée par le programme lors de son exécution.

9. Procédé selon la revendication 8, dans lequel les informations de configuration spécifient un appel système, et dans lequel les informations de configuration sont générées par :
l'obtention d'une version compilée du programme ; et
la détermination d'un appel système effectué lors de l'exécution de la version compilée du programme.

10. Procédé selon la revendication 8 ou 9, dans lequel les informations de configuration spécifient une indication si une connectivité Internet est requise et dans lequel les informations de configuration sont générées par :
l'obtention d'une version compilée du programme ;
la détermination d'un appel système effectué lors de l'exécution de la version compilée du programme ;
la détermination si l'appel système est un appel système lié au réseau ; et
la définition de l'indication qu'une connectivité Internet est requise en réponse à la détermination que l'appel système est un appel système lié au réseau.

11. Procédé selon une quelconque revendication précédente, dans lequel l'obtention d'informations de configuration pour un environnement d'exécution isolé comprend la réception, d'un dispositif utilisateur, d'une demande d'initialisation d'un conteneur pour l'exécution du programme, la demande comprenant les informations de configuration.

12. Support porteur comprenant un code lisible par ordinateur configuré pour amener un ordinateur à réaliser le procédé selon l'une quelconque des revendications 1 à 11.

13. Dispositif (11), comprenant un ou plusieurs processeurs (103) configurés pour :
obtenir des informations de configuration pour un environnement d'exécution isolé (203) ;
obtenir un programme ;
initialiser un environnement d'exécution isolé à partir des informations de configuration ; et
exécuter le programme dans l'environnement d'exécution isolé, dans lequel l'environnement d'exécution isolé isole le programme d'une application principale ;
dans lequel le ou les processeurs sont en outre configurés pour :
recevoir des informations de configuration mises à jour ;
déterminer si la configuration actuelle de l'environnement d'exécution isolé est au moins aussi restrictive que la configuration mise à jour ; et
en réponse à la détermination que la configuration actuelle n'est pas aussi restrictive que la configuration mise à jour, mettre à jour la configuration de l'environnement d'exécution isolé.

14. Dispositif selon la revendication 13, dans lequel le dispositif est un dispositif de module de sécurité matériel.
